# EUROPÄISCHE PATENTANMELDUNG

(11) **EP 2 764 947 A1**
(43) Veröffentlichungstag der Anmeldung: **13.08.2014**
(21) Anmeldenummer: 13154930.5
(22) Anmeldetag: 12.02.2013
(51) Int. Cl.: B23K 20/12, B23K 20/233, C23C 30/00, F01D 5/28

(54) **Fügeverbindungsvorformling, Verfahren zum Fügen sowie Verbundwerkstück mit härtender gamma-prime-Phase umfassenden Fügepartnern**

(71) Anmelder: Siemens Aktiengesellschaft, 80333 München (DE)
(72) Erfinder: Burbaum, Bernd, 14612 Falkensee (DE)

(57) **Zusammenfassung**

Die Erfindung betrifft einen Fügeverbindungsvorformling umfassend zumindest einen ersten Fügepartner (1) mit einer ersten Fügefläche (11) und einen zweiten Fügepartner (2) mit einer zweiten Fügefläche (12), welche zur Fügung an der erste Fügeflächen (11) vorgesehen ist, wobei der erste Fügepartner (1) einen ersten Gehalt an härtender γ'-Phase umfasst, der zweite Fügepartner (2) einen zweiten Gehalt an härtender γ'-Phase umfasst, zwischen der ersten Fügefläche (1) des ersten Fügepartners (11) und der zweiten Fügefläche (2) des zweiten Fügepartners (12) ein Pufferüberzug (3) vorgesehen ist, und wobei der Pufferüberzug (3) einen dritten Gehalt an härtender γ'-Phase umfasst, welcher sowohl geringer ist als der erste Gehalt an härtender γ'-Phase des ersten Fügepartners (1) als auch geringer ist als der zweite Gehalt an härtender γ'-Phase des zweiten Fügepartners (2), dergestalt dass beim Fügevorgang der Pufferüberzug (3) abbreibbar ist.
Ferner betrifft die Erfindung ein Verfahren zum Fügen einen entsprechenden Fügeverbindungsvorformlig sowie ein Verbundwerkstück, welches mit dem Verfahren hergestellt wurde.

## Beschreibung

Die Erfindung betrifft ein Fügeverbindungsvorformling umfassend zumindest einen ersten Fügepartner mit einer ersten Fügefläche und einen zweiten Fügepartner mit einer zweiten Fügefläche, welche zur Fügung an der ersten Fügefläche vorgesehen ist, und wobei der erste Fügepartner einen ersten Gehalt an härtender γ'-Phase umfasst. Weiterhin betrifft die Erfindung ein Verfahren zum Fügen und ein Verbundwerkstück.

Das Reibschweißen gehört zur Gruppe der Pressschweißverfahren. Beim linearen Reibschweißen wird die Energiezufuhr durch eine lineare Relativbewegung der Fügepartner zueinander eingebracht. Durch die Relativbewegung der Bauteile und durch Druck wird die für die Schweißung erforderliche Energie in Form von Wärme erzeugt. Diese Wärmeerzeugung führt im Vergleich zu den Schmelzschweißverfahren zu einer niedrigeren Fügetemperatur, die unterhalb der Schmelztemperatur der zu verbindenden Werkstoffe liegt. Beim linearen Reibschweißen von ausscheidungshärtbaren Nickelbasis-Superlegierungen mit hohem Gehalt an härtender γ'-Phase belasten große Scherkräfte die Einspannvorrichtung der Werkzeugmaschine. Speziell, wenn beide Fügepartner einen hohen Gehalt an härtender γ'-Phase aufweisen, können die zu fügenden Flächengrößen aufgrund der Kräfte limitiert sein.

Bislang wird das lineare Reibschweißen daher nur für das Fügen von Nickelbasis-Superlegierungen eingesetzt, bei denen nur ein Fügepartner einen hohen Gehalt an härtender γ'-Phase enthält. Der zweite Fügeparameter besteht aus einer Nickelbasis-Superlegierung ohne Gehalt an härtender γ'-Phase. Ein Reibschweißen von Fügepartnern von denen jeweils beide einen hohen Gehalt an härtender γ'-Phase aufweisen, ist bislang nicht hinreichend untersucht.

Eine erste Aufgabe der Erfindung ist daher die Angabe eines Fügeverbindungsvorformlings, welcher das oben genannte Problem löst. Eine zweite Aufgabe ist die Angabe eines Verfahrens zum Fügen, welches das oben genannte Problem löst. Eine dritte Aufgabe der Erfindung ist die Angabe eines gefügten Verbundwerkstückes, insbesondere unter Zuhilfenahme des Verfahrens.

Erfindungsgemäß wird die erste Aufgabe mit der Angabe eines Fügeverbindungsvorformlings gemäß dem Oberbegriff des Anspruchs 1 durch die folgenden Merkmale gelöst, wobei:
- ein zweiter Fügepartner einen zweiten Gehalt an härtender γ'-Phase umfasst,
- zwischen einer ersten Fügefläche eines ersten Fügepartners und einer zweiten Fügefläche des zweiten Fügepartners ein Pufferüberzug vorgesehen ist, und
- wobei der Pufferüberzug einen dritten Gehalt an härtender zweiter Fügefläche γ'-Phase umfasst, welcher sowohl geringer ist als der erste Gehalt der härtenden γ'-Phase des ersten Fügepartners als auch geringer ist als der zweite Gehalt der härtenden γ'-Phase des zweiten Fügepartners, so dass beim Fügevorgang der Pufferüberzug abbreibbar ist.

Erfindungsgemäß bewirkt der Pufferüberzug, dass die beiden "harten" Fügepartner, das heißt mit hohem Gehalt an γ'-Phasen, erst mal nicht direkt gefügt werden. Durch das Fügen mittels einer Reibbewegung wird der Pufferüberzug abgerieben und lagert sich in einer Fügezone an. Erfindungsgemäß werden durch die Reibbewegung und den Abrieb des Pufferüberzugs die beiden Fügepartner auf eine geeignete Fügetemperatur gebracht. Das heißt, dass diejenigen Teile der Fügepartner, die einen hohen Gehalt an γ'-Phase aufweisen, erst nach dem Abrieb des Pufferüberzugs und dadurch mit einer geeigneten Fügetemperatur aufeinandertreffen. Dadurch, dass der Pufferüberzug weniger hart ist, das heißt einen geringeren Gehalt an γ'-Phase aufweist als der erste und der zweite Fügepartner, in Verbindung mit einer geeigneten Fügetemperatur, die durch den Abrieb entsteht, werden sowohl die Werkzeugmaschinen als auch die Fügepartner nur sehr gering belastet. Durch die Verkleinerung der Belastung der Werkzeugmaschine kann die Lebensdauer verlängert werden. Auch kann durch die Verkleinerung der Belastung der Fügepartner die Qualität der Reibverbindung erhöht werden.

Bevorzugt ist der Pufferüberzug als Beschichtung auf der ersten Fügefläche und/oder der zweiten Fügefläche vorgesehen. Diese kann beispielsweise mit einem geeigneten Beschichtungsverfahren schnell und einfach vorgenommen werden.

In bevorzugter Ausgestaltung ist als Beschichtung eine Dicke von 0,5-1 mm vorgesehen. Hier ist ein vollständiger Abrieb des Pufferüberzugs besonders gut realisierbar.

Vorzugsweise umfasst der dritte Gehalt an härtender γ'-Phase weniger als 25 % des ersten Gehalts und/oder weniger als 25 % des zweiten Gehalts an härtender γ'-Phase. Dadurch lässt sich der Pufferüberzug problemlos abreiben, ohne die Werkzeugmaschinen, welche den Fügevorgang durchführen, oder die beiden Fügepartner zu belasten, und gleichzeitig die Fügepartner auf eine geeignete Fügetemperatur zu erwärmen. Auch kann der Abrieb, der sich in einer Fügezone festsetzt, dadurch problemlos entfernt werden. Auch kann der dritte Gehalt an härtender γ'-Phase 0 % sein, also gar keine γ'-Phase aufweisen.

Bevorzugt weisen der erste Fügepartner und der zweite Fügepartner einen artähnlichen oder artgleichen Grundwerkstoff auf. Bevorzugt weist der Pufferüberzug ebenfalls einen artähnlichen oder artgleichen Grundwerkstoff wie der erste Fügepartner und/oder der zweite Fügepartner auf. Dies kann von Vorteil sein, wenn der Pufferüberzug nicht vollständig beim Fügevorgang abgerieben wird.

Die auf das Verfahren bezogene Aufgabe wird erfindungsgemäß durch die Angabe eines Verfahrens zum Fügen mit den folgenden Schritten gelöst:
- Bereitstellen eines ersten Fügepartners mit einer ersten Fügefläche, und mit einem ersten Gehalt an härtender γ'-Phase,
- Bereitstellen eines zweiten Fügepartners mit einer zweiten Fügefläche, und mit einem zweiten Gehalt an härtender γ'-Phase,
- Anbringen eines Pufferüberzugs zwischen der ersten Fügefläche des ersten Fügepartners und der zweiten Fügefläche des zweiten Fügepartners, wobei der Pufferüberzug einen dritten Gehalt an härtender γ'-Phase umfasst, welcher sowohl geringer ist als der erste Gehalt der härtenden γ'-Phase des ersten Fügepartners als auch geringer ist als der zweite Gehalt der härtenden γ'-Phase des zweiten Fügepartners,
- Reiben der beiden Fügepartner an den Fügeflächen und zwar dergestalt, dass beim Reiben der Pufferüberzug abgerieben wird, wodurch die beiden Fügepartner, insbesondere an den Fügeflächen auf eine geeignete Fügetemperatur gebracht werden.

Wie oben schon erwähnt sind dadurch, dass der Pufferüberzug einen geringeren Gehalt an γ'-Phase aufweist, als der erste und der zweite Fügepartner, in Verbindung mit einer geeigneten Fügetemperatur, die durch den Abrieb entsteht, sowohl die Werkzeugmaschinen als auch die Fügepartner nur sehr gering belastet. Dadurch kann das Prozessfenster verkleinert werden. Zudem kann die Steifigkeit der Werkzeugmaschine verkleinert werden. Dadurch ergeben sich geringere Investitionskosten.

Bevorzugt wird das Reiben durch lineares Reibschweißen vorgenommen. Dieses eignet sich besonders gut, da hier die so genannte Wärmeeinflusszone deutlich kleiner ist als bei anderen Schweißverfahren.

In bevorzugter Ausgestaltung ist der Pufferüberzug eine Beschichtung auf der ersten Fügefläche des ersten Fügepartners und/oder der zweiten Fügefläche des zweiten Fügepartners, welche durch einen Beschichtungsvorgang aufgebracht wird. Bevorzugt wird beim Fügen das Material, welches durch den Abrieb des Pufferüberzugs entsteht, in einem Randbereich der Fügeflächen abgelagert. Hier kann es einfach entfernt werden, z.B. durch Abschleifen.

Erfindungsgemäß wird die auf das Verbundwerkstück bezogene Aufgabe mit der Angabe eines Verbundwerkstücks gemäß dem Oberbegriff des Anspruchs 12 durch die folgenden Merkmale gelöst, wobei:
ein erster Fügepartner als auch ein zweiter Fügepartner einen hohen Gehalt an härtender γ'-Phase aufweisen und wobei sowohl der erste Fügepartner als auch zweite Fügepartner durch die Anwendung eines Pufferüberzugs zwischen den beiden Fügeflächen nach dem Reiben lediglich geringe bis gar keine Beschädigung, insbesondere durch Rissbildung oder Schrumpfung, aufweisen.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

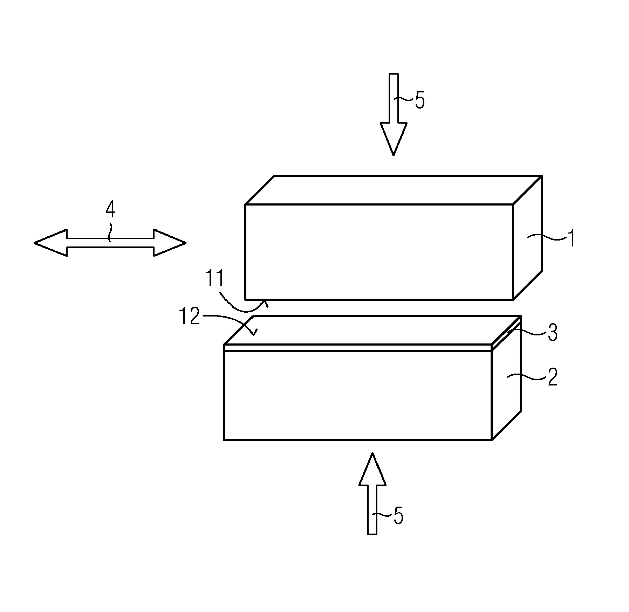

- FIG 1: einen ersten erfindungsgemäßen Fügeverbindungsvorformling.

FIG 1 zeigt einen Fügeverbindungsvorformling mit einem ersten Fügepartner 1 mit einer ersten Fügefläche 11 und einem zweiten Fügepartner 2 mit einer zweiten Fügefläche 12. Die erste Fügefläche 11 und die zweite Fügefläche 12 bilden eine Fügezone aus. Dabei besteht der erste Fügepartner 1 aus einem Grundwerkstoff, der einen ersten Gehalt an härtender γ'-Phase aufweist. Dies kann beispielsweise eine Nickelbasis-Superlegierung mit einem hohen Gehalt, insbesondere 30 - 40 % von dem Grundwerkstoff, an γ'-Phase sein. Zudem weist der zweite Fügepartner 2 einen zweiten hohen Gehalt an härtender γ'-Phase auf. Dies kann beispielsweise eine Nickelbasis-Superlegierung mit einem hohen Gehalt, insbesondere 30 - 40 % von dem Grundwerkstoff, an γ'-Phase sein. Die beiden Fügepartner 1,2 können dabei einen artgleichen Grundwerkstoff mit genau demselben oder ähnlichen Gehalt an härtender γ'-Phase aufweisen oder einen artähnlichen Grundwerkstoff mit genau demselben oder ähnlichen Gehalt an härtender γ'-Phase aufweisen. Erfindungsgemäß ist zwischen der ersten Fügefläche 11 des ersten Fügepartners 1 und der zweiten Fügefläche 12 des zweiten Fügepartners 2 ein Pufferüberzug 3 vorgesehen. In diesem Fall ist der Pufferüberzug 3 auf der Fügefläche 12 des zweiten Fügepartners 2 angebracht. Der Pufferüberzug 3 weist einen dritten Gehalt an härtender γ'-Phase auf, welcher sowohl geringer ist als der erste Gehalt der härtenden γ'-Phase des ersten Fügepartners 1 als auch geringer ist als der zweite Gehalt der härtenden γ'-Phase des zweiten Fügepartners 2. Der Pufferüberzug 3 ist daher nicht so "hart" wie der erste und der zweite Fügepartner 1,2. Der Pufferüberzug 3 hat vorzugsweise ein Dicke zwischen 0,5-1 mm. Er kann beispielsweise als Beschichtung auf die Fügefläche 12 aufgebracht sein, insbesondere eignet sich zur Aufbringung das Laserstrahl-Auftragsschweißen. Der Pufferüberzug 3 weist zudem einen artähnlichen oder artgleichen Grundwerkstoff auf.

Beim Reibschweißvorgang wird eine Kraft 5 in eine Schwingungsrichtung 4 ausgeübt. Während des Reibschweißvorgangs wird der Pufferüberzug 3 abgerieben und lagert sich im Randbereich der Fügezone ab. Der Randbereich wird anschließend nachbearbeitet und die Ablagerungen durch den Pufferüberzug 3 entfernt. Die fertig gefügte Fläche besteht daher im Wesentlichen aus der ersten Fügefläche 11 und der zweiten Fügefläche 12.

Durch den Pufferüberzug 3 und dessen Abrieb wird erfindungsgemäß der erste Fügepartner 1, insbesondere die erste Fügefläche 11 und der zweite Fügepartner 2, insbesondere die zweite Fügefläche 12 auf eine geeignete Fügetemperatur gebracht. Dadurch reiben die beiden "harten" Werkstoffe der ersten beiden Fügepartner 1,2, das heißt die Werkstoffe mit einem hohen Gehalt an γ'-Phase erst zum Ende des Fügeprozesses und bei einer geeigneten Fügetemperatur aneinander. Dadurch ist die Belastung für die Werkzeugmaschinen, welchen den Reibprozess durchführen, wesentlich geringer. Dadurch erhöht sich die Lebensdauer der Werkzeuge. Zudem kann die Steifigkeit der Werkzeugmaschinen verkleinert werden. Dadurch ergeben sich geringerer Investitionskosten. Ein weiterer Vorteil besteht darin, dass auch die Fügepartner 1,2 selber geringeren Belastungen ausgesetzt sind, so dass sich Rissbildung vermeiden lässt. Auch kann vorteilhafterweise das Prozessfenster verkleinert werden.

## Patentansprüche

1. Fügeverbindungsvorformling umfassend zumindest einen ersten Fügepartner (1) mit einer ersten Fügefläche (11) und einen zweiten Fügepartner (2) mit einer zweiten Fügefläche (12), welche zur Fügung an der ersten Fügefläche (11) vorgesehen ist, und wobei der erste Fügepartner (1) einen ersten Gehalt an härtender γ'-Phase umfasst,
**dadurch gekennzeichnet, dass**
- der zweite Fügepartner (2) einen zweiten Gehalt an härtender γ'-Phase umfasst,
- zwischen der ersten Fügefläche (1) des ersten Fügepartners (11) und der zweiten Fügefläche (2) des zweiten Fügepartners (12) ein Pufferüberzug (3) vorgesehen ist, und
- wobei der Pufferüberzug (3) einen dritten Gehalt an härtender γ'-Phase umfasst, welcher sowohl geringer ist als der erste Gehalt an härtender γ'-Phase des ersten Fügepartners (1) als auch geringer ist als der zweite Gehalt an härtender γ'-Phase des zweiten Fügepartners (2), so dass beim Fügevorgang der Pufferüberzug (3) abbreibbar ist.

2. Fügeverbindungsvorformling nach Anspruch 1,
**dadurch gekennzeichnet, dass**
der Pufferüberzug (3) als Beschichtung auf der ersten Fügefläche (11) und/oder der zweiten Fügefläche (12) vorgesehen ist.

3. Fügeverbindungsvorformling nach Anspruch 1 oder 2,
**dadurch gekennzeichnet, dass**
der Pufferüberzug (3) eine Dicke von 0,5 - 1 mm aufweist.

4. Fügeverbindungsvorformling nach einem der vorhergehenden Ansprüche,
**dadurch gekennzeichnet, dass**
der dritte Gehalt an härtender γ'-Phase weniger als 25 % des ersten Gehalts und /oder weniger als 25 % des zweiten Gehalts an härtender γ'-Phase umfasst.

5. Fügeverbindungsvorformling nach einem der vorhergehenden Ansprüche,
**dadurch gekennzeichnet, dass**
der dritte Gehalt an härtender γ'-Phase 0 % ist.

6. Fügeverbindungsvorformling nach einem der vorhergehenden Ansprüche,
**dadurch gekennzeichnet, dass**
der erste Fügepartner (1) und der zweite Fügepartner (2) einen artähnlichen oder artgleichen Grundwerkstoff aufweisen.

7. Fügeverbindungsvorformling nach Anspruch 6,
**dadurch gekennzeichnet, dass**
der Pufferüberzug (3) einen artähnlichen oder artgleichen Grundwerkstoff wie der erste Fügepartner (1) und/oder der zweite Fügepartner (2) aufweist.

8. Verfahren zum Fügen mit den folgenden Schritten:
- Bereitstellen eines ersten Fügepartners (1) mit einer ersten Fügefläche (11), und mit einem ersten Gehalt an härtender γ'-Phase,
- Bereitstellen eines zweiten Fügepartners (2) mit einer zweiten Fügefläche (12), und mit einem zweiten Gehalt an härtender γ'-Phase,
- Anbringen eines Pufferüberzugs (3) zwischen der ersten Fügefläche (11) des ersten Fügepartners (1) und der zweiten Fügefläche (12) des zweiten Fügepartners (2), wobei der Pufferüberzug (3) einen dritten Gehalt an härtender γ'-Phase umfasst, welcher sowohl geringer ist als der erste Gehalt der härtenden γ'-Phase des ersten Fügepartners (1) als auch geringer ist als der zweite Gehalt der härtenden γ'-Phase des zweiten Fügepartners (2),
- Reiben der beiden Fügepartner (1,2) an den Fügeflächen (11,12) und zwar dergestalt, dass beim Reiben der Pufferüberzug (3) abgerieben wird, wodurch die beiden Fügepartner (1,2), insbesondere an den Fügeflächen (11,12) auf eine geeignete Fügetemperatur gebracht werden.

9. Verfahren zum Fügen nach Anspruch 8,
**dadurch gekennzeichnet, dass**
das Reiben durch lineares Reibschweißen vorgenommen wird.

10. Verfahren zum Fügen nach einem der Ansprüche 8 bis 9,
**dadurch gekennzeichnet, dass**
der Pufferüberzug (3) eine Beschichtung auf der ersten Fügefläche (11) des ersten Fügepartners (1) und/oder der zweiten Fügefläche (12) des zweiten Fügepartners (2) ist, und durch einen Beschichtungsvorgang aufgebracht wird.

11. Verfahren zum Fügen nach einem der Ansprüche 8 bis 10,
**dadurch gekennzeichnet, dass**
beim Reiben das Material, welches durch den Abrieb des Pufferüberzugs (3) entsteht, in einem Randbereich der Fügeflächen (11,12) abgelagert wird.

12. Verbundwerkstück, welches mit einem Verfahren nach einem der Ansprüche 8 bis 11 hergestellt wurde, umfassend zumindest einen ersten Fügepartner (1) mit einer ersten Fügefläche (11) und einen zweiten Fügepartner (2) mit einer zweiten Fügefläche (12), wobei die erste Fügefläche (11) des ersten Fügepartners (1) mit der zweiten Fügefläche (12) des zweiten Fügepartners (2) verbunden ist,
**dadurch gekennzeichnet, dass**
der erste Fügepartner (1) als auch der zweite Fügepartner (2) einen hohen Gehalt an härtender γ'-Phase aufweisen und wobei sowohl der erste Fügepartner (1) als auch zweite Fügepartner (2) durch die Anwendung eines Pufferüberzugs (3) zwischen den beiden Fügeflächen (11,12) nach dem Reiben lediglich geringe bis gar keine Beschädigung, insbesondere durch Rissbildung oder Schrumpfung, aufweisen.
